# EUROPEAN PATENT SPECIFICATION

(11) **EP 2 747 475 B1**
(45) Date of publication and mention of the grant of the patent: **22.07.2015**
(21) Application number: 12306619.3
(22) Date of filing: 19.12.2012
(51) Int. Cl.: H04W 28/06

(54) **Method and system for transmitting packets over a radio link**
Verfahren und System zum Übertragen von Paketen über eine Funkverknüpfung
Procédé et système de transmission de paquets sur une liaison radio

(43) Date of publication of application: 25.06.2014
(73) Proprietor: ALCATEL LUCENT, 92100 Boulogne-Billancourt (FR)
(72) Inventor: Marques, Stéphane, 78141 Velizy (FR); Jauffret, Clément, 78141 Velizy (FR); Pasotti, Marco, 20059 Vimercate (MB) (IT)
(74) Representative: Shamsaei Far, Hassan

(56) References cited:
- US-A1- 2002 101 842
- US-A1- 2008 310 339

## Description

### Technical field

The present disclosure generally relates to the field of packet-switched radio communication networks. In particular, the present disclosure relates to a method for transmitting packets, in particular, but not exclusively, Ethernet packets, over a radio link.

### Background art

In a radio access network, the mobile backhaul portion typically connects a plurality of base stations to a central office by means of radio (i.e. microwave) links. The central office interfaces the base stations, and hence the users connected thereto, to the core network through which they exchange data with the service providers. As known, exchanged data may comprise voice data and data related to high-speed services, such as the Internet.

One of the commonly used physical layer/data link layer protocol (also referred to as "L1/L2 protocol") is Ethernet and it is used also in radio communication networks for supporting a variety of network protocols (also referred to as "L3 protocols") such as IP (Internet Protocol). Typically the IP data units are encapsulated in MAC (Media Access Control) frames, also referred to as L2 frames, at the end points of the radio link and the MAC frames are in turn encapsulated in Ethernet packets prior to transmission over the air.

US 2008/0310339 A1 discloses a radio communication method including: notifying a reception-side radio communication apparatus of omitted-source-address information indicating a first source address permanently assigned to a source device of a first data frame to be transmitted to the reception-side radio communication apparatus; determining whether or not the first source address is identical to a second source address permanently assigned to a source device of a second data frame to be transmitted to the reception-side radio communication apparatus; and transmitting the second data frame to the reception-side radio communication apparatus after omitting transmission of the second source address and also adding, to the second data frame, an omission indication indicating that the second source address is omitted, if the first source address is determined to be identical to the second source address.

### Summary

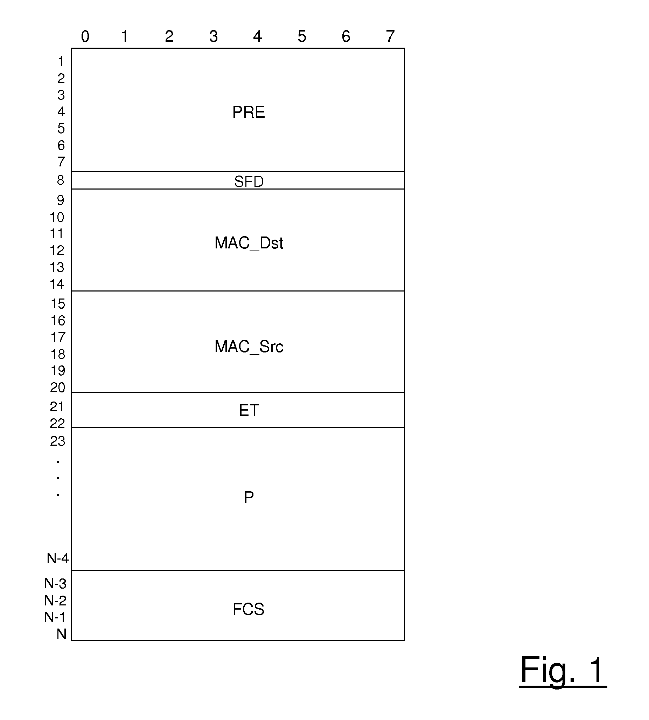

An exemplary Ethernet packet is shown in Figure 1. The structure of the Ethernet packet shown in Figure 1 is compliant with the standard IEEE 802.3-2008, section 1, clause 3 (pages 49-54). The integer numbers on the left of the packet indicate the bytes. Number N indicates the total number of bytes. The integer numbers on top of the packet indicate the bits within each byte (number 0 is used for the most significant bit and number 7 for the least significant bit).

As shown in Figure 1, the standard Ethernet packet comprises:
- a preamble field PRE comprising 7 bytes of a pre-defined value;
- a start of frame delimiter field SFD of 1 byte comprising a pre-defined, fixed sequence of bits, namely 10101011;
- a MAC (or L2) frame, in turn comprising:
   - a MAC destination address field MAC_Dst of 6 bytes, which contains the MAC address of the destination for which the MAC frame is intended (also referred to as L2 destination address);
   - a MAC source address field MAC_Src of 6 bytes, which contains the MAC address of the source from which the MAC frame was initiated (also referred to as L2 source address);
   - a length/type field ET of 2 bytes whose value specifies the length of the subsequent field (i.e. the payload field) or indicates the network protocol encapsulated in the subsequent field. In this latter case, the field is referred to as Ethertype field. The encapsulated protocol may be, for instance, the IP protocol version 4 (IPv4), the IP protocol version 6 (IPv6), the MPLS (Multi-Protocol Label Switching), the IPv4 or IPv6 protocol over MPLS. According to the standard, values of 1500 (0x05DC hexadecimal) and below indicate that this field contains the length of the subsequent field, while values of 1536 (0x0600 hexadecimal) and above indicate that this field is used for the Ethertype. The Ethertype field typically comprises a value selected within a list of pre-defined Ethertype values. For instance, a pre-defined value of 0x0800 hexadecimal indicates that the encapsulated protocol is the IPv4 protocol, a pre-defined value of 0x86DD hexadecimal indicates that the encapsulated protocol is the IPv6 protocol, and a pre-defined value of 0x8847 or 0x8848 hexadecimal indicates that the MPLS mechanism is applied;
   - a payload field P, of variable length, comprising the data to be transmitted, which are formatted according to a given protocol (e.g. IPv4, IPv6, MPLS, IPv4 over MPLS or IPv6 over MPLS). The length of the payload field may range from 46 to 1500 bytes for typical Ethernet frames (in the following referred to as "standard MAC frames"), and it may reach 9600 bytes for the so called jumbo frames; and
   - a frame check sequence field FCS of 4 bytes containing a cyclic redundancy check (CRC) value for error detection.

The payload comprises data related to the implementation of the network protocol; such data typically comprise the network layer source and destination addresses (also referred to as L3 addresses, e.g. the IP addresses of the source and destination network elements) and/or the MPLS labels. The payload of a standard MAC frame has a length which ranges between 46 and 1500 bytes.

Moreover, consecutive Ethernet packets are separated by an interframe gap which is 12 bytes long and which consists in idle time between packets.

As known, the IEEE 802.1Q-2011 ("Virtual bridged LAN") standard protocol supports virtual LANs (VLANs) on an Ethernet network. Implementation of this protocol requires that, in Ethernet packets, an additional field is inserted between the source MAC address field and the length/type field of the MAC frame. The additional field is four bytes long and comprises a VLAN tag identifying the VLAN to which the MAC frame belongs. The first two bytes contain the tag protocol identifier (TPID), and the other two bytes contain the VLAN identifier (VID) which specifies the VLAN to which the MAC frame belongs. The TPID has a pre-defined, fixed value equal to 0x8100 hexadecimal which identifies the frame as an IEEE 802.1Q frame.

In this case, the length of the payload of the standard MAC frame ranges between 42 and 1500 bytes.

It is also possible to use double tagging when the MAC frames are transported along two different VLANs, according to the IEEE 802.1 ad standard protocol ("provider bridge"). For example, this is the case when Internet service providers use a VLAN for exchanging user traffic that is already VLAN tagged. When double tagging is used, an outer VLAN tag field is inserted between the source MAC address field, carrying a so called "service VLAN tag", and an inner VLAN tag field, in turn inserted between the outer VLAN tag field and the length/type field of the MAC frame, which carries the so called "customer VLAN tag" related to the virtual bridged LAN, as described above. Indeed, a provider bridge machine typically inserts a service VLAN tag between the source MAC address field and an already present customer VLAN tag in the frame, or the machine may add the two VLAN tags, if none were present. Also the service VLAN tag field comprises 4 bytes. The first two bytes contain the tag protocol identifier (TPID), and the other two bytes contain the VLAN identifier (VID) The TPID of the service tag has a pre-defined, fixed value equal to 0x88A8 hexadecimal.

The overall length of the standard MAC frame ranges between 64 and 1522 bytes, according to the IEEE 802.1Q standard protocol, and between 64 and 1526 bytes according to the IEEE 802.1ad standard protocol.

The inventors noticed that transmission of data within Ethernet packets exhibits high overheads, especially when short MAC frames (e.g. 64-bytes long frames) are used. Transmission of high overheads may be manageable along wired links, where high-speed connections and availability of large bandwidths are common. However, radio links are more critical as the bandwidth is limited. Therefore, optimization of the bandwidth utilization is desired.

In view of the above, there is provided a method for transmitting packets, in particular, but not exclusively, Ethernet packets, over a radio link, which overcomes the aforesaid drawbacks. In particular, there is provided a method for transmitting packets, in particular, but not exclusively, Ethernet packets, over a radio link which allows reducing the packets overheads, thereby optimizing the utilization of the radio link bandwidth.

In the following, the expression "L1/L2 protocol" will indicate a protocol providing functions and services encompassing the physical layer and the data link layer of the ISO/OSI protocol stack, such as, e.g. Ethernet. Moreover, the expression "L3 protocol" will indicate a protocol of the network layer of the ISO/OSI protocol stack, such as, e.g., IP (IPv4 or IPv6).

In the following description and in the claims, the expression "static datum" comprised within a packet will designate a packet's field or field portion compulsorily or optionally foreseen by the L1/L2 protocol or another protocol (such as, for instance the IEEE 802.1Q standard protocol) and having either a pre-defined value or a value selected out of a set of pre-defined values, said pre-defined value(s) being defined by any of said protocol(s) (for instance, the preamble and star of frame delimiter field of an Ethernet packet).

Furthermore, in the following description and in the claims, the expression "dynamic datum" comprised within a packet will designate a packet's field or field portion foreseen by the L1/L2 protocol or by the L3 protocol or by other protocols, whose value is not pre-defined by any of such protocols (for instance, the source and destinations MAC addresses of an Ethernet packet).

According to a first aspect, there is provided a method for transmitting packets over a radio link, wherein the radio link connects a first network element and a second network element, wherein at least a first packet and a second packet comprise a respective dynamic datum, wherein the method comprises, at the first network element:
a) associating the dynamic datum to a datum identifier, wherein the datum identifier is of a lower length than the dynamic datum;
b) adding the datum identifier to the first packet; and
c) if the dynamic datum of the second packet corresponds to the dynamic datum of the first packet, replacing, within the second packet, the dynamic datum with the datum identifier.

Preferably, each one of the first packet and the second packet comprises also a static datum and:
- step b) further comprises removing the static datum from the first packet; and
- step c) further comprises removing the static datum from the second packet.

Preferably, the packets are formatted according to a L1/L2 protocol and encapsulate data units formatted according to a L3 protocol.

According to preferred embodiments, the L1/L2 protocol is Ethernet.

Preferably, the static datum comprise one of more of: a preamble field, a start of frame delimiter field, a VLAN tag protocol identifier, an Ethertype.

Preferably, the dynamic datum comprises a couple of a MAC destination address and a MAC source address.

Preferably, the L3 protocol is the Internet Protocol, and the dynamic datum comprises a couple of an IP destination address and an IP source address.

Preferably, at step a) associating comprises storing the dynamic datum in a table, wherein the datum identifier is an index of said table.

Profitably, the method further comprises, before step a), associating the static datum to a further datum identifier, wherein the further datum identifier is of a lower length than the static datum, adding the further datum identifier to the first packet, and, before step c), adding the further datum identifier to the second packet.

According to preferred embodiments, step b) comprises writing the datum identifier into a label and prefixing the label to the first packet.

Preferably, the label further comprises a flag whose value is indicative of the presence of both the dynamic datum and the associated datum identifier within the first packet.

Preferably, at step c) replacing comprises removing the dynamic datum from the second packet, writing the datum identifier into a further label and prefixing the further label to the second packet.

Profitably, steps a), b) and c) are temporarily suspended in case of adverse propagating conditions over the radio link.

According to a second aspect, there is provided a network element for a packet-switched radio communication network, the network element being configured to process packets to be transmitted to a further network element via a radio link connecting the network element and the further network element, wherein at least a first packet and a second packet comprise a respective dynamic datum, wherein the first network element is further configured to:
- associate the dynamic datum to a datum identifier, wherein the datum identifier is of a lower length than the dynamic datum;
- add the datum identifier to the first packet; and
- if the dynamic datum of the second packet corresponds to the dynamic datum of the first packet, replace, within the second packet, the dynamic datum with the datum identifier.

According to a third aspect, there is provided a computer program product comprising computer-executable instructions for performing, when the program is run on a computer, the steps of the method as set forth above.

### Brief description of the drawings

Embodiments of the disclosure will be better understood by reading the following detailed description, given by way of example and not of limitation, to be read with reference to the accompanying drawings, wherein:
- Figure 1 shows the structure of an Ethernet packet according to IEEE 802.3-2008 standard;
- Figure 2 shows a first network element and a second network element of a radio communication network and a radio link between them;
- Figure 3 is a flowchart of the method for transmitting packets over the radio link of Figure 2 according to an embodiment of the present disclosure;
- Figure 4a shows the typical structure of an Ethernet packet supporting the IPv4 protocol, Figure 4b shows the structure of a learning packet and Figure 4c shows the structure of the packet with reduced length according to the method of the present disclosure; and
- Figure 5 shows the structure of the label attached to the learning packet of Figure 4b and to the reduced length packet of Figure 4c prior to transmission over the radio link.

### Detailed description of preferred embodiments

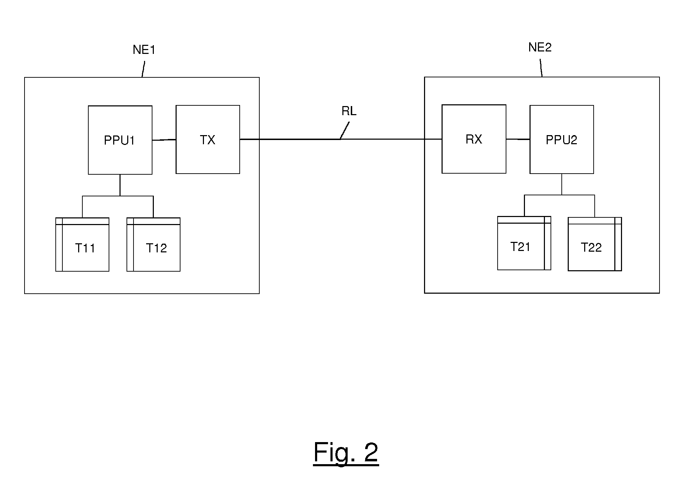

Figure 2 shows first network element NE1 and a second network element NE2 of a packet-switched radio communication network and a radio link RL connecting them. The packet-switched radio communication network may be a packet-switched radio access communication network, such as a UMTS radio access network (UTRAN) or a LTE radio access network (E-UTRAN), and the first and second network element NE1, NE2 may belong to the mobile backhaul portion of the network. For instance, the first element NE1 may be connected to a nodeB of the UMTS/LTE radio access network, and the second element NE2 may be connected to a further node of the mobile backhaul portion of the network.

Preferably, the packet-switched radio communication network is an Ethernet network.

The first network element NE1 preferably comprises a packet processing unit PPU1, a number of tables and a transmitter TX. The number of tables is preferably equal to or higher than 1. The exemplary first network element NE1 of Figure 2 comprises two tables T11 and T12. The packet processing unit PPU1 is connected to the tables T11, T12, and it is further connected to the transmitter TX. The second network element NE2 preferably comprises a packet processing unit PPU2, a number of tables (preferably equal to or higher than the number of tables of the first network element NE1) and a receiver RX. Also the second network element NE2 of Figure 2 comprises two tables T21 and T22. The receiver RX is connected to the packet processing unit PPU2, which is in turn connected to the tables T21, T22. The first network element NE1 and the second network element NE2 may comprise other components that are not shown in Figure 2 and that will not be described herein after, since they are not relevant for the present description. In particular, Figure 2 shows the components for the transmission of data from the first network element NE1 to the second network element NE2. The first network element NE1 and the second network element NE2 further comprise similar components (not shown in Figure 2) for the transmission of data in the opposite direction, namely from the second network element NE2 to the first network element NE1.

The tables T11, T12 at the first network element NE1 and the tables T21, T22 at the second network element NE2 preferably have size equal to a power of two. The tables may have 64 entries.

Tables T11 and T12 are empty at the deployment of the first network element NE1 and are progressively populated upon the processing of packets belonging to different data traffic flows handled by the first network element NE1, as it will be described herein after. Analogously, the corresponding tables T21 and T22 at the second network element NE2 are empty at the deployment of the second network element NE2 and are progressively populated, in the same manner as the tables T11, T12 of the first network element NE1, at the reception of packets from the first network element NE1, as it will be described herein after.

The operation of the first network element NE1 and of its components mentioned above will be now described in detail.

It is assumed that the first network element NE1 generates or receives, from a further network element of the packet-switched radio communication network (not shown in Figure 2), a data traffic flow to be forwarded to the second network element NE2 along the radio link.

Preferably, the data traffic flow comprises a sequence of packets formatted according to an L1/L2 protocol, in turn encapsulating data units formatted according to a pre-determined L3 protocol. The packets are preferably Ethernet packets. The data units may be, for instance, IP frames. More in particular, the data units may be IPv4 frames or IPv6 frames. Moreover, the data unit may also be an MPLS frame, an IPv4 over MPLS frame, or an IPv6 over MPLS frame. The above list of data unit types is merely exemplary and non limiting, as other data units formatted according to other network protocols may also be considered.

The method of the present disclosure provides for, in a preliminary phase, identifying, within a packet processed by the network element NE1 of the radio link RL, the following data:
- first static data, each first static datum comprising a respective packet's field or field portion compulsorily foreseen by the L1/L2 encapsulating protocol and having a same pre-defined value within all the packets of all the data traffic flows. The pre-defined values of the first static data are defined by the L1/L2 encapsulating protocol. In case of standard Ethernet packets (see Figure 1), data belonging to this group preferably comprise the preamble field PRE and the start of frame delimiter field SFD of the Ethernet packets;
- second static data, each second static datum comprising a respective packet's field or field portion compulsorily or optionally foreseen by the L1/L2 encapsulating protocol or another protocol, such as, e.g., the IEEE 802.1Q standard protocol, having a value that may be selected among a set of pre-defined values and which may be different for different data traffic flows. The pre-defined values of the second static data are defined by the L1/L2 encapsulating protocol or by another protocol such as, e.g., the IEEE 802.1Q standard protocol. In case of Ethernet packets, data belonging to this group preferably comprise the type/length field of the standard Ethernet packet, when it contains Ethertype data, and/or portions of the VLAN tag(s), such as the VLAN tag protocol identifier(s) or TPID(s); and
- dynamic data, each dynamic datum comprising a respective packet's field or field portion foreseen by the L1/L2 encapsulating protocol or by the L3 encapsulated protocol or by other protocols whose value is not pre-defined by any one of such protocols. The values of the dynamic data are different for different data traffic flows to be transmitted over the radio link RL. The dynamic data preferably comprise addresses, such as L2 addresses and/or L3 addresses. In case of Ethernet packets, data belonging to this group preferably comprise the MAC source address and the MAC destination address. Moreover, in case the network protocol is IP (IPv4 or IPv6), the dynamic data may comprise also the IP (IPv4 or IPv6) source address and the IP (IPv4 or IPv6) destination address.

The method of the present disclosure provides for removing, from a subset of or from all the packets of a data traffic flow, the first static data and the second static data. The first and second static data are preferably systematically removed from all incoming packets, the first static data being removed without notification to the second network element NE2 while the second static data being removed with notification to the second network element NE2. Notification of the removal of the second static data is performed by replacing each second static datum with a respective static datum identifier into the transmitted packets, as it will be described in greater detail herein after.

Further, according to the method of the present disclosure, each dynamic datum may be removed, from a subset of or from all the packets of a data traffic flow, after a learning phase.

In particular, at the first network element NE1, when processing a packet, the dynamic data are checked and it is established whether they are already "known" to the first network element NE1, i.e. whether each dynamic datum has a value already stored within one of the table(s) T11, T12. If not, a learning phase is set up by the first network element NE1, which writes the unknown value of the dynamic datum in a respective table T11, T12 and does not remove this dynamic datum from the packet yet.

Moreover, each unknown value of each dynamic datum is associated to a respective dynamic datum identifier. A dynamic datum identifier has preferably lower length than the original dynamic datum associated thereto. The dynamic datum identifier is preferably an index allowing locating the value of the dynamic datum associated thereto within the respective table. It may be a number indicative of the position of the value within the table. If the table has, e.g., 64 entries, this number is 6 bits long.

Then, the first network element NE1 modifies the packet, by adding to it the dynamic datum identifier(s), as it will be described herein after. This way, the modified packet carries both each dynamic datum with unknown value and the respective dynamic datum identifier. Further, the first network element NE1 preferably sends the modified packet to the second network element NE2 and the second network element NE2 preferably stores the value of each dynamic datum carried by the packet in its table(s) T21, T22 using the dynamic datum identifier(s) as table index(es). The modified packet carrying at least one dynamic datum with unknown value and also the associated dynamic datum identifier(s) will be referred to in the following as "learning packet". The present disclosure provides for sending one learning packet for each unknown value of a dynamic datum. The dynamic datum identifier preferably allows locating later on the value of the dynamic datum in one of the tables T21, T22 of the second network element NE2 for recovering the originally transmitted packets, as it will be described in greater detail herein after.

The learning phase only involves the first packet comprising a given value of each dynamic datum, i.e. the first packet of a given data traffic flow. Once the value of a dynamic datum is "learnt" by the first network element NE1 and by the second network element NE2 (i.e. the value is stored in one of the tables T11, T12 of the first network element NE1 and in a corresponding table T21, T22 of the second network element NE2), the method of the present disclosure provides for removing the dynamic datum from the subsequent packets of the same data traffic flow, starting from the second packet, and replacing it with the respective dynamic datum identifier, as it will be described in greater detail herein after.

According to preferred embodiments of the present disclosure, the first network element NE1, prior to sending a packet to the second network element NE2, preferably prefixes a label to the packet. The label preferably comprises:
- one or more static datum identifiers, each static datum identifier being indicative of a removed second static datum (e.g. one identifier for the Ethertype data and one identifier for the TPID(s));
- for each dynamic datum, a learning flag, indicating whether this dynamic datum is present within the packet (i.e. whether the packet is a learning packet), and a field containing the dynamic datum identifier. The learning flag is preferably one bit, which is set to 1 when the packet is a learning packet.

Moreover, the label may optionally comprise, for each dynamic datum, a version flag indicative of the version of the protocol to which this dynamic datum relates (e.g. the version of the IP protocol).

Preferably, the label further comprises presence flags, one for each dynamic datum. The presence flag of a dynamic datum is indicative of the presence of the associated learning flag and of the field containing the associated dynamic datum identifier within the packet.

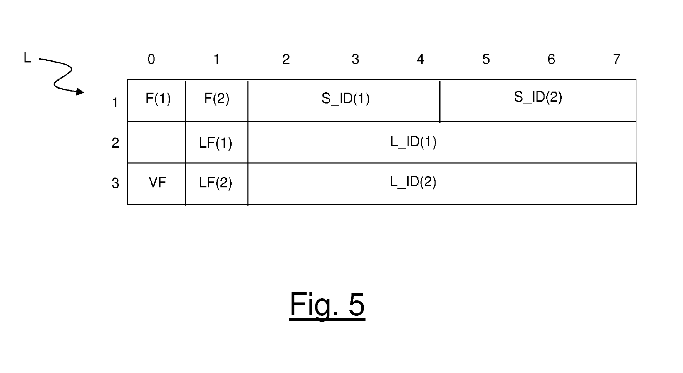

In Figure 5, an exemplary structure of a label L is shown. The integer numbers on the left of the label indicate the bytes. The label L of Figure 5 comprises 3 bytes. The integer numbers on top of the label indicate the bits within each byte (number 0 is used for the most significant bit and number 7 for the least significant bit).

The label L of Figure 5 comprises a first identifier field S_ID(1) comprising a static datum identifier and a second identifier field S_ID(2) comprising a further static datum identifier. The first identifier field S_ID(1) may comprise, e.g., a static datum identifier indicative of the tag protocol identifier(s) (TPID(s)) removed from the packet. The second identifier field S_ID(2) may comprise, e.g., a further static datum identifier indicative of the Ethertype removed from the packet. These fields are 3 bits long in the label L of Figure 5. The 3 bits of the first identifier field S_ID(1) may have the following values: 000 indicating that no TPID is removed, 001 indicating that the customer TPID is removed, 010 indicating that the service TPID is removed, 011 indicating that both the customer TPID and the service TPID are removed. The values indicated above are merely exemplary, as other combinations of bits may be used for encoding the information indicating whether the service TPID and/or the customer TPID are removed. The 3 bits of the second identifier field S_ID(2) may indicate up to 8 different Ethertypes.

The static datum identifier(s) are preferably stored in one or more pre-compiled tables at the network elements NE1, NE2. In particular, these pre-compiled tables store the combination of bits used for indicating whether the TPID(s) are removed and/or the bits indicative of the Ethertypes. The pre-compiled tables preferably contain also the fixed, pre-defined values of the TPID(s) which are associated to the combination of bits of the first identifier field S_ID(1) and/or the Ethertypes which are associated to the combination of bits of the second identifier field S_ID(2).

The label L further comprises a first learning flag LF(1) indicative of the presence of a first dynamic datum, e.g. a couple (source and destination) of MAC addresses, within the packet, and a second learning flag LF(2) indicative of the presence of a second dynamic datum, e.g. a couple (source and destination) of IP addresses, within the packet. Each learning flag LF(1), LF(2) is one bit long, wherein the bit may be equal to 1 when the associated dynamic datum is present within the packet (i.e. the packet is a learning packet), and equal to 0 when the associated dynamic datum is not present within the packet. The label L of Figure 5 also comprises a version flag VF, which is 1 bit long, indicative of the version of the protocol to which the second dynamic datum is related. In case, e.g., the second dynamic datum is a couple of IP addresses, the version flag VF is indicative of the IP version, namely IPv4 or IPv6.

The label L further comprises a third identifier field L_ID(1) comprising the dynamic datum identifier associated to the first dynamic datum, and a fourth identifier field L_ID(2) comprising the dynamic datum identifier associated to the second dynamic datum. These fields are 6 bits long in the label L of Figure 5 (i.e. they allow locating the value of each dynamic datum within a table of 64 entries).

The label L of Figure 5 further comprises a first presence flag F(1) indicative of the presence of the first learning flag LF(1) and of the third identifier field L_ID(1). The first presence flag F(1) is 1 bit long and it may be equal to 1 when the first learning flag LF(1) and the third identifier field L_ID(1) are present, and to 0 when they are absent. Analogously, the label L of Figure 5 comprises a second presence flag F(2) indicative of the presence of the second learning flag LF(2) and of the fourth identifier field L_ID(2). The second presence flag F(2) is 1 bit long and it may be equal to 1 when the second learning flag LF(2) and the fourth identifier field L_ID(2) are present, and to 0 when they are absent. As shown in Figure 5, the presence flags F(1), F(2) are preferably prefixed to the label.

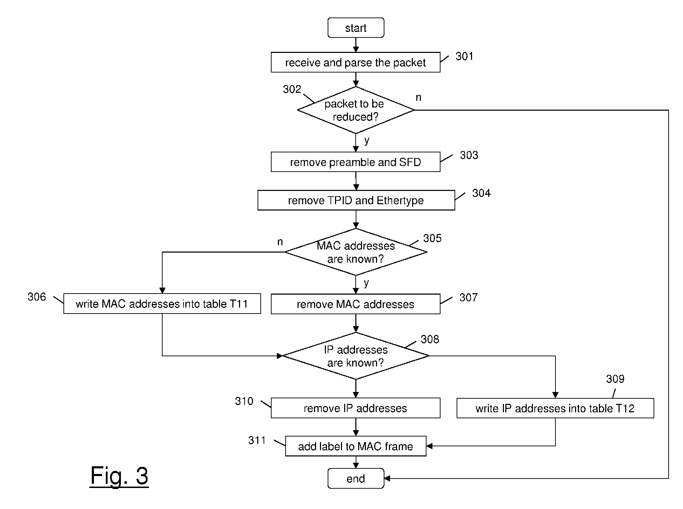

The steps of the method of the present disclosure performed by the packet processing unit PPU1 of the first network element NE1 will now be described in greater detail with reference to the flow-chart of Figure 3.

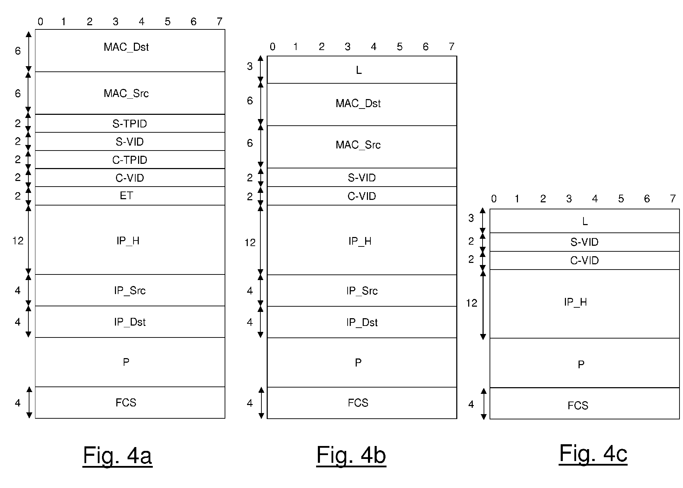

For sake of example, in the following description and in the flow chart of Figure 3 it will be assumed that the first network element NE1 is configured to process data traffic flows comprising a sequence of Ethernet packets encapsulating IPv4 frames. Therefore, reference will be made to the standard structure of an Ethernet packet encapsulating an IPv4 frame. The L2 frame of such packet is shown in Figure 4a. In Figures 4a-4c, the integer numbers on the left of the packet indicate the length in bytes of the fields within the packet. The integer numbers on top of the packet indicate the bits within each byte (number 0 is used for the most significant bit and number 7 for the least significant bit).

The L2 frame of Figure 4a comprises (from top to bottom):
- a MAC destination address field MAC_Dst 6 bytes long;
- a MAC source address field MAC_src 6 bytes long;
- a first VLAN tag comprising a service tag protocol identifier field S-TPID of 2 bytes and a service VLAN identifier field S-VID of 2 bytes;
- a second VLAN tag comprising a customer tag protocol identifier field C-TPID of 2 bytes and a customer VLAN identifier field C-VID of 2 bytes;
- an Ethertype field ET of 2 bytes;
- an IPv4 header IP_H of 12 bytes;
- an IPv4 source address field IP_Src of 4 bytes;
- an IPv4 destination address field IP_Dst of 4 bytes;
- a payload field P of variable length (not indicated in Figure 4a); and
- a frame check sequence field FCS of 4 bytes.

It is further assumed that tables T11, T12, T21 and T22 have 64 entries.

At step 301, the packet processing unit PPU1 receives a packet and parses it to identify the fields comprised within the packet. In particular, the packet processing unit PPU1 preferably parses the packet and identifies the first static data, the second static data and the dynamic data comprised therein. Referring to the exemplary Ethernet packet of Figure 4a, during step 301 the packet processing unit PPU1 identifies the preamble field PRE and the start of frame delimiter field SFD of the packet (not shown in Figure 4a) as first static datum. Then, the packet processing unit PPU1 identifies the VLAN tags and the Ethertype as second static datum. Finally, the packet processing unit PPU1 identifies the couple of MAC source and destination addresses, and the couple of IPv4 source and destination addresses as dynamic data.

It is to be noticed that a dynamic datum may be identified as a couple of addresses but also as a single source or destination address. However, considering the couple of addresses as dynamic datum to be "learnt", instead of the individual addresses, is particularly advantageous in case of communication between a plurality of network elements, such as base stations, and a single network element, such as a central office. In this case, indeed, one address is always the same and therefore the table usage is more efficient. Moreover, if source and destination addresses are stored in different tables, the overall number of tables at the first network element NE1 and at the second network element NE2 may be doubled.

Moreover, at step 302, the packet processing unit PPU1 decides whether the packet is to be processed for reducing its length. The packet processing unit PPU1 may decide on the basis of, for instance, an information on the priority of the packet. If the packet has a low priority, the packet processing unit PPU1 may decide not to reduce its length for not populating the table(s) T11, T12 with entries related to packets that might be subsequently discarded or stuck in low priority queues in case of network congestion.

If the packet processing unit PPU1 decides that the packet is to be reduced in length, then steps 303-311 of the method according to the present disclosure are performed.

At step 303, the packet processing unit PP1 preferably removes the identified first static data. In the case considered here, it removes from the packet the preamble field PRE and the start of frame delimiter field SFD. This result in reducing the length of the packet by 8 bytes. Then, at step 304, the packet processing unit PPU1 preferably removes the identified second static data. In the case considered here, it preferably removes from the packet the service tag protocol identifier field S-TPID (having a fixed value equal to 0x88A8 hexadecimal), the customer tag protocol identifier field C-TPID (having a fixed value equal to 0x8100 hexadecimal) and the Ethertype field ET (having a fixed value equal to 0x0800 hexadecimal). This results in further reducing the length of the packet by 6 bytes.

At a step not shown in Figure 3, the packet processing unit PPU1 preferably selects, among the dynamic data identified at step 301, the dynamic data to be actually removed from the packets, after the learning phase. Selection is performed on the basis of, for instance, the filling level of the table(s) T11, T12. In particular, referring to the exemplary packet considered above, the packet processing unit PPU1 may select to remove only the MAC addresses if table T12 is full or only the IP addresses if table T11 is full or both if entries are available in both tables T11, T12. Moreover, selection may be performed on the basis of statistical metrics indicative of the occurrence of the current value of the dynamic data within the packets (i.e. indicative of the fact that the value of a dynamic datum is more or less frequently encountered in the packets).

In the following, it will be assumed that the packet processing unit PP1 selects to remove all the identified dynamic data (namely both the couple of MAC addresses and the couple of IPv4 addresses).

Then, the packet processing unit PPU1 looks up in the table T11 and/or the table T12 to check whether each dynamic datum to be removed is already comprised within one of the tables T11 and T12. The step of looking up in each table T11, T12 is preferably performed by direct scan of the table (which can be used when the table size is equal to 64) or, for a larger size of the table T11, T12, it may be performed by using a hashing algorithm.

In particular, at step 305, the packet processing unit PPU1 checks if the couple of MAC destination address and MAC source address carried by the packet is already contained in table T11. If the couple of MAC addresses is not already contained within the table T11, the packet processing unit PPU1 preferably writes the couple of MAC addresses in the next free entry of table T11 (step 306). If the couple of MAC addresses is already contained within the table T11, the packet processing unit PPU1 preferably removes the couple of MAC addresses from the packet (step 307).

At step 308, the packet processing unit PPU1 checks whether the couple of IPv4 source address and IPv4 destination address carried by the packet is already contained in table T12. If the couple of IPv4 addresses is not already contained within the table T12, the packet processing unit PPU1 preferably writes the couple of IPv4 addresses in the next free entry of table T12 (step 309). If the couple of IPv4 addresses is already contained within the table T12, the packet processing unit PPU1 preferably removes the couple of IPv4 addresses from the packet (step 310).

Steps 308, 309, 310 may be performed substantially in parallel with steps 305, 306, 307, respectively.

At steps 306 and 309, the value of each dynamic datum is associated to the respective dynamic datum identifier indicative of the position of the value within the respective table T11, T12. As already described above, the dynamic datum identifier has a lower length than the dynamic datum. If, for example, table T11 has 64 entries, each couple of MAC addresses, which is 12 bytes long, is associated to a respective number of 6 bits. Analogously, if also table T12 has 64 entries, also each couple of IPv4 addresses, which is 8 bytes long, is associated to a respective number of 6 bytes.

Then, at step 311, the packet processing unit PPU1 preferably compiles the label L and prefixes it to the packet. Moreover, each dynamic datum whose value is not already contained within a table T11, T12 is not removed as it may be sent to the second network element NE2 together with its associated dynamic datum identifier.

The label L has the structure shown in Figure 5. If both the MAC addresses and the IP addresses are not already contained in tables T11, T12, at the end of step 311, the packet processing unit PPU1 preferably provides a learning packet that has the structure represented in Figure 4b. In this situation, within the label L prefixed to the learning packet:
- the first presence flag F(1) and the second presence flag F(2) are both set to 1;
- the first learning flag LF(1) and the second learning flag LF(2) are both set to 1;
- the first identifier field S_ID(1) comprises a number of 3 bits indicative of the service tag protocol identifier S-TPID and the customer tag protocol identifier C-TPID;
- the second identifier field S_ID(2) comprises a number of 3 bits indicative of the Ethertype;
- the third identifier field L_ID(1) comprises a number of 6 bits indicative of the entry in which the couple of MAC addresses is stored in table T11; and
- the fourth identifier field L_ID(2) comprises a number of 6 bits indicative of the entry in which the couple of IPv4 addresses is stored in table T12.

If the couple of MAC addresses is already contained in table T11, but the IPv4 addresses are not already contained in table T12, at the end of step 311 the packet processing unit PPU1 preferably provides a learning packet with a label L in which the first presence flag F(1) is set to 1 and the first learning flag LF(1) is set to 0, and the couple of MAC addresses are removed from the packet. The other fields of the label L contain the same data as above.

Analogously, if the couple of IPv4 addresses is already contained in table T12, but the MAC addresses are not already contained in table T11, at the end of step 311 the packet processing unit PPU1 preferably provides a learning packet with a label L in which the second presence flag F(2) is set to 1 and the second learning flag LF(2) is set to 0, and the couple of IPv4 addresses are removed from the packet. The other fields of the label L contain the same data as above.

As can be noticed from Figures 4a and 4b, the L2 frame of the learning packet of Figure 4b is reduced by 6 bytes with respect to the L2 frame of the original packet and it comprises the label L which is 3 bytes long. Therefore a net reduction of 3 bytes is achieved during the learning phase.

If the couple of MAC addresses is already contained in table T11 and the couple of IPv4 addresses is already contained in table T12, at the end of step 311, the packet processing unit PPU1 preferably provides a packet having the structure represented in Figure 4c. Within the label L prefixed to the packet:
- the first flag presence F(1) and the second presence flag F(2) are both set to 1;
- the first learning flag LF(1) and the second learning flag LF(2) are both set to 0;
- the first identifier field S_ID(1) comprises a number of 3 bits indicative of the service tag protocol identifier S-TPID and the customer tag protocol identifier C-TPID;

- the second identifier field S_ID(2) comprises a number of 3 bits indicative of the Ethertype;
- the third identifier field L_ID(1) comprises a number of 6 bits indicative of the entry in which the MAC addresses are stored in table T11; and
- the fourth identifier field L_ID(2) comprises a number of 6 bits indicative of the entry in which the IPv4 addresses are stored in table T12.

As can be noticed from Figures 4a and 4c, the L2 frame is reduced by 26 bytes with respect to the original L2 frame. The label L which is only 3 bytes long is added, therefore leading to a net reduction of 23 bytes after the learning phase.

Assuming that the original packet contains an L2 frame of 64 bytes, the reduction performed on the L2 frame according to the method of the present disclosure advantageously allows achieving a throughput gain equal to about 64/(64-23)≅156%. The throughput gain is defined as the ratio between the number of bytes of the L2 frame without reduction and the number of transmitted bytes of the L2 frame after the reduction.

Considering also the removal of the preamble field PRE and the start of frame delimiter field SFD, the overall packet reduction is of 34 bytes. With an overall reduction of 34 bytes, the throughput gain is equal to about 213%. Therefore, according to the method of the present disclosure, the radio link RL shows an equivalent capacity which is much higher than the original capacity.

According to the embodiments described above, the frame check sequence field FCS, which is 4 bytes long, has not been modified by the implementation of the method. Prior to transmission of the packet with reduced length to the second network element NE2, the packet processing unit PPU1 recalculates the frame check sequence FCS in order to take into account the inserted label L and the removed data, for ensuring integrity of the reduced length packet over the air. However, according to other embodiments, the packet processing unit PPU1 may also remove a portion of the frame check sequence FCS. In particular, the packet processing unit PPU1 may reduce the length of the frame check sequence field FCS from 4 bytes to 2 bytes. Also in this case, the frame check sequence FCS is recalculated for taking into account the removed data and the label L.

It is to be noticed that even if the description of the method has been performed with reference to an Ethernet packet encapsulating an IPv4 frame, this is merely exemplary, as the method may be applied also to different packets. Other examples of encapsulated frames which can be considered are: IPv6 frame, MPLS frame, IPv4 over MPLS frame, IPv6 over MPLS frame. In particular, when considering an IPv6 frame encapsulated in an Ethernet packet, the method of the present disclosure allows removing up to 50 bytes for an L2 frame of 64 bytes. This results in a throughput gain equal to about 64/(64-50+3)≅376%, which means that the equivalent capacity of the radio link is more than tripled.

Advantageously, the method of the present disclosure allows achieving a significant improvement in terms of efficiency and throughput over the radio link, which is a very critical resource. The added label, containing the identifiers (of much less length) of the removed data, is advantageously of a very reduced length, so that it allows transporting a minimal overhead over the air.

After step 311, the packet processing unit PPU1 forwards the packet to the transmitter TX which sends it along the radio link RL towards the receiver RX of the second network element NE2.

The receiver RX, upon reception of the packet, forwards it to the packet processing unit PPU2 of the second network element NE2. The packet processing unit PPU2 checks the presence flags F(1), F(2) and, depending on their values, retrieves the value of the learning flag LF(1), LF(2), the (optional) version flag VL and the dynamic datum identifier of each dynamic datum whose associated learning flag LF(1), LF(2) is activated (i.e. whose associated learning flag LF(1), LF(2) is equal to 1 in the exemplary situation described above).

If the learning flag related to a dynamic datum is activated (i.e. the packet is a learning packet), the packet processing unit PPU2 preferably retrieves from the packet the value of the dynamic datum and stores this value into one of the tables T21, T22 at a position indicated by the dynamic datum identifier.

Further, the packet processing unit PPU2 uses the static datum identifier(s) for retrieving the second static data from the pre-complied table in which it is stored at the second network element NE2. In particular, the packet processing unit PPU2 preferably uses the 3-bit combination contained in the first identifier field S_ID(1) for retrieving the value(s) of the TPID(s) removed from the packet, and uses the 3-bit combination contained in the second identifier field S_ID(2) for retrieving the value of the Ethertype.

Once each second static datum is retrieved, the packet processing unit PPU2 adds it to the packet. Then, it also adds to the packet each first static datum (which is available at the second network element NE2 since is has a pre-defined value defined by the L1/L2 protocol) and recovers the originally transmitted packet.

Upon reception of the learning packets, the values of each dynamic datum are stored in a respective table T21, T22 at the second network element NE2. This way, each table T21, T22 at the second network element NE2 contain the same values of a dynamic datum comprised within a corresponding table T11, T12 at the first network element NE1, at the same positions, indicated by the dynamic datum identifiers.

If the learning flag related to a dynamic datum is not activated, the packet processing unit PPU2 preferably uses the dynamic datum identifier retrieved from the packet for retrieving the associated value of the dynamic datum from one of the tables T21, T22. Then, the packet processing unit PPU2 preferably adds the retrieved dynamic datum to the packet.

Further, the packet processing unit PPU2 uses the static datum identifier(s) for retrieving the second static data, as described above.

Once the second static data and the dynamic data are retrieved, the packet processing unit PPU2 adds them to the packet. Then, it also adds to the packet the first static data and recovers the originally transmitted packet.

Then, the packet processing unit PPU2 of the second network element NE2 checks the frame check sequence FCS (which may or may not be reduced in length from 4 to 2 bytes), removes it from the packet and calculates a new frame check sequence of 4 bytes for appending it to the recovered original packet.

The method of the present disclosure is advantageously implemented as a one-way mechanism controlled by the network element at the transmitting end of the radio link. Indeed, the network element at the receiving end need not send any return signal which might waste bandwidth of the radio link. Advantageously, there is no need of any "handshaking" between the transmitting end and the receiving end as the data contained within the tables at the receiving end are always synchronized with the data contained in the tables at the transmitting end.

Moreover, advantageously, the method is automatically implemented and it does not require any manual intervention by the network operator for configuring the network elements, as they automatically "learn" associating the data to be removed with the identifiers, which allow recovering the removed data after transmission on the radio link.

According to the present disclosure, a mechanism is provided for refreshing the data contained within the table(s) T11, T12 at the first network element NE1, which might get full. This mechanism may be selected among the following ones:
- periodic renewal: according to this mechanism the first network element NE1 periodically (e.g. every 100 milliseconds) empties its table(s) T11, T12, and then starts populating them again with the next incoming data traffic flow;
- ageing renewal: according to this mechanism, each entry of a table is associated to a time counter, which provides a measure of the time elapsed since the entry has been used for the last time (i.e. since the value comprised in the entry is contained in a packet for the last time); when the table is full and a new entry is to be created (because, e.g., an unknown couple of MAC addresses is carried by the incoming packet), the oldest entry (i.e. the entry not being used for the longest time) is replaced by the new one;
- statistic renewal: according to this mechanism, each entry of a table is associated to a hit counter, which counts how many times the value comprised in that entry (e.g. the couple of MAC addresses) occurred in packets processed by the first network element NE1 within a given period of time. When the table is full and a new entry is to be created (because, e.g., an unknown couple of MAC addresses is carried by the incoming packet), the entry having the minimum number of hits within the last period of time is replaced by the new one.

The implementation of the mechanism for refreshing the tables only impacts on the first network element NE1, the second network element NE2 at the receiving end of the radio link RL being unaware of the mechanism implemented.

According to preferred embodiments of the method, the operations performed at steps 305-311 of the method are temporarily suspended when the radio link RL experiences degraded propagation conditions. These degraded propagation conditions may be identified at the first network element NE1 by checking some link quality parameters available therein and related to the reception quality at the second network element NE2. These link quality parameters are exchanged between the first network element NE1 and the second network element NE2 along a signaling path typically established from the second network element NE2 to the first network element NE1. In particular, the first network element NE1 may check link quality parameters such as the Forward Error Correction (FEC) stress, which is related to the application of a FEC code to the data carried by the packets. This parameter may comprise the number of corrected bytes for a Reed-Solomon FEC code or the stress indication for a low density parity check code (LDPC). The link quality parameters may comprise also the mean square error (MSE) at the output of a demodulator.

Suspension of the operations at steps 305-311 in case of degraded propagation conditions advantageously allows avoiding propagation of errors. Indeed, if a learning packet contains errors, in particular on the dynamic data transported therein, the tables at the receiving end may be populated with wrong values, thus leading to an incorrect recovery of the original packet.

Steps 303 and 304 of the method may be performed even in degraded propagation conditions of the radio link RL since they are related to the systematic removal of data which have fixed, pre-defined values, and not subject to any learning phase, so that the risk of error propagation does not apply.

The method of the present disclosure provides for starting again performing steps 305-311 once the propagation conditions of the radio link RL recover from degradation.

Therefore, advantageously, the method according to the present disclosure is aware of the radio propagation conditions and robust in case of critical propagation conditions. This allows minimizing the propagation of errors.

The functions of the various elements shown in the Figure 2, including any functional blocks labeled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like, as that of Figure 3, represent various processes which may be substantially represented in computer readable medium and so executed by a computer or processor, whether or not such computer or processor is explicitly shown.

## Claims

1. A method for transmitting packets over a radio link (RL),
wherein said radio link (RL) connects a first network element (NE1) and a second network element (NE2), and at least a first packet and a second packet comprise a respective dynamic datum including a respective packet's portion whose value is not pre-defined according to any protocol used for transmitting the packets, wherein said method comprises, at said first network element (NE1):
a) associating said dynamic datum of said first packet to a datum identifier (L_ID(1), L_ID(2)), wherein said datum identifier (L_ID(1), L_ID(2)) is of a lower bit length than said dynamic datum of said first packet;
b) adding said datum identifier (L_ID(1), L_ID(2)) to said first packet; and
c) if the dynamic datum of said second packet corresponds to the dynamic datum of said first packet, replacing, within said second packet, said dynamic datum with said datum identifier (L_ID(1), L_ID(2)).

2. The method according to claim 1, wherein each one of said first packet and said second packet comprises also a respective static datum including a respective packet's portion having a pre-defined value and wherein:
- said step b) further comprises removing said static datum from said first packet; and
- said step c) further comprises removing said static datum from said second packet.

3. The method according to claim 1 or 2, wherein said packets are formatted according to a L1/L2 protocol and encapsulate data units formatted according to a L3 protocol.

4. The method according to claim 3, wherein said L1/L2 protocol is Ethernet.

5. The method according to claim 2, wherein said static datum comprise one of more of: a preamble field, a start of frame delimiter field, a VLAN tag protocol identifier, a Ethertype.

6. The method according to claim 4 or 5, wherein said dynamic datum comprise a couple of a MAC destination address and a MAC source address.

7. The method according to any of claims 3 to 6, wherein said L3 protocol is the Internet Protocol, and said dynamic datum comprises a couple of an IP destination address and an IP source address.

8. The method according to any of the preceding claims, wherein at said step a) said associating comprises storing said dynamic datum in a table, wherein said datum identifier (L_ID(1), L_ID(2)) is an index of said table.

9. The method according to any of the claims 2 to 8, wherein it further comprises, before said step a), associating said static datum to a further datum identifier (S_ID(1), S_ID(2)), wherein said further datum identifier (S_ID(1), S_ID(2)) is of a lower bit length than said static datum, adding said further datum identifier (S_ID(1), S_ID(2)) to said first packet, and, before said step c), adding said further datum identifier (S_ID(1), S_ID(2)) to said second packet.

10. The method according to any of the preceding claims, wherein said step b) comprises writing said datum identifier (L_ID(1), L_ID(2)) into a label (L) and prefixing said label (L) to said first packet.

11. The method according to claim 10, wherein said label (L) further comprises a flag (LF(1), LF(2)) whose value is indicative of the presence of both said dynamic datum and said associated datum identifier (L_ID(1), L_ID(2)) within said first packet.

12. The method according to any of the preceding claims, wherein at said step c) said replacing comprises removing said dynamic datum from said second packet, writing said datum identifier (L_ID(1), L_ID(2)) into a further label (L) and prefixing said further label (L) to said second packet.

13. The method according to any of the preceding claims, wherein steps a), b) and c) are temporarily suspended in case of adverse propagating conditions over the radio link (RL).

14. A network element (NE1) for a packet-switched radio communication network, said network element (NE1) being configured to process packets to be transmitted to a further network element (NE2) via a radio link (RL) connecting said network element (NE1) and said further network element (NE2),
wherein at least first packet and a second packet comprise a respective dynamic datum including a respective packet's portion whose value is not pre-defined according to any protocol used for transmitting the packets,
wherein said first network element (NE1) is further configured to:
- associate said dynamic datum of said first packet to a datum identifier (L_ID(1), L_ID(2)), wherein said datum identifier (L_ID(1), L_ID(2)) is of a lower bit length than said dynamic datum of said first packet;
- add said datum identifier (L_ID(1), L_ID(2)) to said first packet; and
- if the dynamic datum of said second packet corresponds to the dynamic datum of said first packet, replace, within said second packet, said dynamic datum with said datum identifier (L_ID(1), L_ID(2)).

15. A computer program product comprising computer-executable instructions for performing, when the program is run on a computer, the steps of the method according to any of claims 1 to 13.

## Patentansprüche

1. Verfahren zur Übertragung von Paketen über eine Richtfunkstrecke (Radio Link, RL),
wobei besagter Radio Link (RL) ein erstes Netzwerkelement (NE1) und ein zweites Netzwerkelement (NE2) miteinander verbindet sowie mindestens ein erstes Paket und ein zweites Paket ein zugehöriges dynamisches Datumsfeld einschließlich einer zum Paket gehörigen Teilmenge enthalten, deren Wert nicht gemäß irgendeinem für die Übertragung der Pakete verwendeten Protokoll vorgegeben ist, wobei besagte Methoden bei besagtem erstem Netzwerkelement (NE1) Folgendes umfassen:
a) Zuordnung besagten dynamischen Datums besagten ersten Pakets zu einer Datumskennung (L_ID(1), L_ID(2)), wobei besagte Datumskennung (L_ID(1), L_ID(2)) von kürzerer Bitlänge als besagtes dynamisches Datum besagten ersten Pakets ist;
b) Hinzufügen besagter Datumskennung (L_ID(1), L_ID(2)) zu besagtem erstem Paket; und
c) in dem Fall, dass das dynamische Datum besagten zweiten Pakets dem dynamischen Datum besagten ersten Pakets entspricht, Ersetzen besagten dynamischen Datums durch besagte Datumskennung (L_ID(1), L_ID(2)) im zweiten Paket.

2. Verfahren gemäß Anspruch 1, wobei von besagtem erstem Paket und besagtem zweitem Paket jedes zudem ein zugehöriges statisches Datum einschließlich einer zugehörigen Paket-Teilmenge umfasst, die einen vorgegebenen Wert hat und wobei:
- besagter Schritt b) zudem die Entfernung besagten statischen Datums aus besagtem erstem Paket umfasst; und
- besagter Schritt c) zudem die Entfernung besagten statischen Datums aus besagtem zweitem Paket umfasst.

3. Verfahren nach Anspruch 1 oder 2, wobei besagte Pakete entsprechend einem L1-/L2-Protokoll und eingekapselte Dateneinheiten entsprechend einem L3-Protokoll formatiert werden.

4. Verfahren nach Anspruch 3, wobei das besagte Protokoll Ethernet ist.

5. Verfahren nach Anspruch 2, wobei besagtes statisches Datum eines oder mehrere der folgenden Elemente enthält: ein Präambelfeld, ein Start Frame Delimiter-Feld, eine Protokollkennung für VLAN-Tags und ein Ethertype.

6. Verfahren nach Anspruch 4 oder 5, wobei besagtes dynamisches Datum eine an eine MAC-Quelladresse gekoppelte MAC-Zieladresse umfasst.

7. Verfahren nach einem beliebigen der Ansprüche 3 bis 6, wobei besagtes L3-Protokoll das Internet-Protokoll ist und besagtes dynamisches Datum eine an eine IP-Quelladresse gekoppelte IP-Zieladresse umfasst.

8. Verfahren nach einem beliebigen der vorstehenden Ansprüche, wobei in besagtem Schritt a) besagte Zuordnung die Speicherung besagten dynamischen Datums in einer Tabelle umfasst, wobei besagte Datumskennung (L_D(1), L_ID(2)) ein Index besagter Tabelle ist.

9. Verfahren nach einem beliebigen der Ansprüche 2 bis 8, vor besagtem Schritt a) weiterhin das Zuordnen des besagten statischen Datums zu einer weiteren Datumskennung (S_ID(1), S_ID(2)), wobei besagte weitere Datumskennung (S_ID(1), S_ID(2)) von kürzerer Bit-Länge als besagtes statisches Datum ist, besagtem erstem Paket besagte weitere Datumskennung (S ID(1), S_ID(2)) hinzugefügt wird und vor besagtem Schritt c) besagte weitere Datumskennung (S ID(1), S_ID(2)) besagtem zweitem Paket hinzugefügt wird.

10. Verfahren nach einem beliebigen der vorstehenden Ansprüche, wobei besagter Schritt b) umfasst, besagte Datumskennung (L_ID(1), L_ID(2)) in ein Lable (L) einzutragen und besagtes Label (L) dem ersten Paket vorzuschalten.

11. Verfahren nach Anforderung 10, wobei besagtes Label (L) des Weiteren ein Flag (LF(1), LF(2)) umfasst, dessen Wert für das Vorhandensein sowohl besagten dynamischen Datums als auch besagter zugeordneter Datumskennung (L_ID(1), L_ID(2)) innerhalb besagten ersten Pakets indikativ ist.

12. Verfahren nach einem beliebigen der vorstehenden Ansprüche, wobei bei besagtem Schritt c) besagtes Ersetzen das Entfernen besagten dynamischen Datums aus dem zweiten Paket umfasst, wobei besagte Datumskennung (L_ID(1), L_ID(2)) in ein weiteres Label (L) eingetragen und dabei besagtes weiteres Label besagtem zweitem Paket vorgeschaltet wird.

13. Verfahren nach einem beliebigen der vorstehenden Ansprüche, wobei die Schritte a), b) und c) im Fall ungünstiger Verbreitungsbedingungen über die Funkverbindung (Radio Link, RL) vorübergehend ausgesetzt werden.

14. Netzwerkelement (NE1) für ein paketvermitteltes Kommunikationsnetzwerk, wobei besagtes Netzwerkelement (NE1) für das Prozessieren von Paketen konfiguriert wird, die per Funkverbindung (Radio Link, RL) an ein weiteres Netzwerkelement (NE2) zu übermitteln sind und besagtes Netzwerkelement (NE1) mit besagtem weiterem Netzwerkelement (NE2) verbindet,
wobei mindestens erstes Paket und ein zweites Paket ein entsprechendes dynamisches Datum enthalten, das eine entsprechende Paket-Teilmenge enthält, deren Wert nicht gemäß irgendeinem der für die Übermittlung des Pakets verwendeten Protokolle vorgegeben ist,
wobei besagtes erstes Netzwerkelement (NE1) weiterhin konfiguriert ist, um:
- besagtes dynamisches Datum besagten ersten Pakets einer Datumskennung (L_ID(1), L_ID(2)) zuzuordnen, wobei besagte Datumskennung (L_ID(1), L_ID(2)) von kürzerer Bitlänge als besagtes dynamisches Datum besagten ersten Pakets ist;
- besagte Datumskennung (L_ID(1), L_ID(2)) zu besagtem erstem Paket hinzuzufügen; und
- in dem Fall, dass das dynamische Datum besagten zweiten Pakets dem dynamischen Datum besagten ersten Pakets entspricht, besagtes dynamisches Datum durch besagte Datumskennung (L_ID(1), L_ID(2)) im zweiten Paket zu ersetzen.

15. Computerprogramm-Produkt mit computerausführbaren Befehlen zum Durchführen der Schritte des Verfahrens nach einem beliebigen der Ansprüche 1 bis 13, wenn das Programm auf einem Computer läuft.

## Revendications

1. Procédé de transmission de paquets sur une liaison radio (RL),
dans lequel ladite liaison radio (RL) relie un premier élément de réseau (NE1) et un deuxième élément de réseau (NE2), et au moins un premier paquet et un deuxième paquet comprennent une donnée dynamique respective comprenant une partie du paquet respectif dont la valeur n'est pas prédéfinie conformément à un quelconque protocole utilisé pour transmettre les paquets, dans lequel ledit procédé comprend, au niveau dudit premier élément de réseau (NE1), les étapes suivantes :
a) associer ladite donnée dynamique dudit premier paquet à un identifiant de donnée (L_ID(1), L_ID(2)), dans lequel ledit identifiant de donnée (L_ID(1), L_ID(2)) est d'une longueur de bit inférieure à celle de ladite donnée dynamique dudit premier paquet ;
b) ajouter ledit identifiant de donnée (L_ID(1), L_ID(2)) audit premier paquet ; et
c) si la donnée dynamique dudit deuxième paquet correspond à la donnée dynamique dudit premier paquet, remplacer, dans ledit deuxième paquet, ladite donnée dynamique par ledit identifiant de donnée (L_ID(1), L_ID(2)).

2. Procédé selon la revendication 1, dans lequel chaque paquet parmi ledit premier paquet et ledit deuxième paquet comprend également une donnée statique respective comprenant une partie du paquet respectif ayant une valeur prédéfinie et dans lequel :
- ladite étape b) comprend en outre le retrait de ladite donnée statique dudit premier paquet ; et
- ladite étape c) comprend en outre le retrait de ladite donnée statique dudit deuxième paquet.

3. Procédé selon la revendication 1 ou 2, dans lequel lesdits paquets sont mis en forme conformément à un protocole L1/L2 et encapsulent des unités de données mises en forme conformément à un protocole L3.

4. Procédé selon la revendication 3, dans lequel ledit protocole L1/L2 est Ethernet.

5. Procédé selon la revendication 2, dans lequel ladite donnée statique comprend un ou plusieurs éléments parmi : un champ de préambule, un champ de délimiteur de début de trame, un identifiant de protocole d'étiquette VLAN, un Ethertype.

6. Procédé selon la revendication 4 ou 5, dans lequel ladite donnée dynamique comprend un couple d'une adresse de destination MAC et d'une adresse source MAC.

7. Procédé selon l'une quelconque des revendications 3 à 6, dans lequel ledit protocole L3 est le protocole Internet, et ladite donnée dynamique comprend un couple d'une adresse de destination IP et d'une adresse source IP.

8. Procédé selon l'une quelconque des revendications précédentes, dans lequel à ladite étape a) ladite association comprend le stockage de ladite donnée dynamique dans une table, dans lequel ledit identifiant de donnée (L_ID(1), L_ID(2)) est un indice de ladite table.

9. Procédé selon l'une quelconque des revendications 2 à 8, comprenant en outre les étapes suivantes, avant ladite étape a), associer ladite donnée statique à un autre identifiant de donnée (S_ID(1), S_ID(2)), dans lequel ledit autre identifiant de donnée (S_ID(1), S_ID(2)) est d'une longueur de bit inférieure à celle de ladite donnée statique, ajouter ledit autre identifiant de donnée (S_ID(1), S_ID(2)) audit premier paquet, et, avant ladite étape c), ajouter ledit autre identifiant de donnée (S_ID(1), S_ID(2)) audit deuxième paquet.

10. Procédé selon l'une quelconque des revendications précédentes, dans lequel ladite étape b) comprend l'écriture dudit identifiant de donnée (L_ID(1), L_ID(2)) dans une étiquette (L) et le préfixage de ladite étiquette (L) audit premier paquet.

11. Procédé selon la revendication 10, dans lequel ladite étiquette (L) comprend en outre un indicateur (LF(1), LF(2)) dont la valeur indique la présence de ladite donnée dynamique et dudit identifiant de donnée associé (L_ID(1), L_ID(2)) dans ledit premier paquet.

12. Procédé selon l'une quelconque des revendications précédentes, dans lequel à ladite étape c) ledit remplacement comprend le retrait de ladite donnée dynamique dudit deuxième paquet, l'écriture dudit identifiant de donnée (L_ID(1), L_ID(2)) dans une autre étiquette (L) et le préfixage de ladite autre étiquette (L) audit deuxième paquet.

13. Procédé selon l'une quelconque des revendications précédentes, dans lequel les étapes a), b) et c) sont temporairement suspendues en cas de conditions de propagation négatives sur la liaison radio (RL).

14. Élément de réseau (NE1) pour un réseau de communication radio à commutation de paquets, ledit élément de réseau (NE1) étant configuré pour traiter des paquets à transmettre à un autre élément de réseau (NE2) par l'intermédiaire d'une liaison radio (RL) reliant ledit élément de réseau (NE1) et ledit autre élément de réseau (NE2),
dans lequel au moins un premier paquet et un deuxième paquet comprennent une donnée dynamique respective comprenant une partie du paquet respectif dont la valeur n'est pas prédéfinie conformément à un quelconque protocole utilisé pour transmettre les paquets,
dans lequel ledit premier élément de réseau (NE1) est en outre configuré pour :
- associer ladite donnée dynamique dudit premier paquet à un identifiant de donnée (L_ID(1), L_ID(2)), dans lequel ledit identifiant de donnée (L_ID(1), L_ID(2)) est d'une longueur de bit inférieure à celle de ladite donnée dynamique dudit premier paquet ;
- ajouter ledit identifiant de donnée (L_ID(1), L_ID(2)) audit premier paquet ; et
- si la donnée dynamique dudit deuxième paquet correspond à la donnée dynamique dudit premier paquet, remplacer, dans ledit deuxième paquet, ladite donnée dynamique par ledit identifiant de donnée (L_ID(1), L_ID(2)).

15. Produit de programme informatique comprenant des instructions exécutables par ordinateur pour exécuter, lorsque le programme est exécuté sur un ordinateur, les étapes du procédé selon l'une quelconque des revendications 1 à 13.
